# NEUE EUROPÄISCHE PATENTSCHRIFT

(11) **EP 0 707 629 B2**
(45) Veröffentlichungstag und Bekanntmachung des Hinweises auf die Entscheidung über den Einspruch: **11.10.2000**
(45) Hinweis auf die Patenterteilung: 08.10.1997
(21) Anmeldenummer: 94919663.8
(22) Anmeldetag: 27.06.1994
(51) Int. Cl.: C11D 3/39, C11D 3/395

(54) **VERFAHREN ZUR ELIMINIERUNG MIGRIERTER BESTANDTEILE AUS MEHRWEG-KUNSTSTOFFGEBINDEN FÜR LEBENSMITTEL**
PROCESS FOR ELIMINATING MIGRATED ELEMENTS FROM REUSABLE PLASTIC CONTAINERS FOR FOODSTUFFS
PROCEDE D'ELIMINATION DE COMPOSANTS AYANT MIGRE DANS DES EMBALLAGES EN PLASTIQUE REUTILISABLES POUR ALIMENTS

(30) Priorität: 05.07.1993 DE 4322328
(43) Veröffentlichungstag der Anmeldung: 24.04.1996
(73) Patentinhaber: HENKEL-ECOLAB GmbH & CO. OHG, 40589 Düsseldorf (DE)
(72) Erfinder: WERSHOFEN, Thomas, D-41065 Mönchengladbach (DE); UHL, Petra, D-47804 Krefeld (DE); LAUFENBERG, Alfred, A-2100 Leobendorf (AT)
(86) Internationale Anmeldenummer: EP9402080
(87) Internationale Veröffentlichungsnummer: WO9502032

(56) Entgegenhaltungen:
- EP-A- 0 147 207
- WO-A-91/17236
- DE-A- 3 928 747
- FR-A- 2 321 301
- JP-A- 3 256 829
- Henkel Referate 29, Seiten 42-48 (1993-01)
- Henkel Referate 33, Seiten 69-75 (1997)
- Magnus Pyke, "Catering Science and Technology", pp. 20-29, editor John Murray

## Beschreibung

Die Erfindung betrifft die Eliminierung migrierter Bestandteile, insbesondere von Aromabestandteilen, aus Mehrweg-Gebinden, die aus Kunststoffen bestehen und zur Aufnahme von Lebensmitteln dienen.

Bei der Befüllung von Mehrweg-Flaschen aus Kunststoffen, beispielsweise aus Polyethylenterephthalat (PET), Polycarbonat (PC), Polypropylen (PP), Polyacrylnitril (PAN), Polyethylennaphthalat (PEN) oder Polyvinylchlorid (PCV), nimmt der jeweilige Kunststoff deutliche Mengen Aromabestandteile aus dem Getränk auf. Hierbei handelt es sich nicht um Absorption an der Kunststoffoberfläche, sondern um Migration in den Kunststoff hinein bzw. durch den Kunststoff hindurch. Hierbei handelt es sich um ein Phänomen, das in der Lebensmittelindustrie durchaus bekannt ist und das dazu führt, daß in Kunststoffgebinden abgefüllte Lebensmittel weitaus größere Mengen an Arommabestandteilen enthalten müssen als z.B. die entsprechenden in Glas verpackten Lehensmittel, um eine hinreichende Aromakonzentration über einen gewissen Zeitraum zu gewährleisten. Diese Migration wirft jedoch noch ein weitaus ernsthafteres Problem für die Verwendung von Mehrweg-Kunststoffgebinden auf: Falls nämlich beispielsweise bei der nächsten Befüllung einer Kunststoffflasche ein anderes Getränk abgefüllt wird, kann es durch remigrierte Aromabestandteile zu einer Geschmacksveränderung kommen (flavor-carry-over). Das vorstehend genannte Migrationsphänomen tritt darüber hinaus auch bei Mehrweg-Kunststoffgebinden für Milchprodukte auf, da die in den Verpackungen verbleibenden Milchproduktreste mikrobiell abgebaut werden und dabei entstandene geruchs- und geschmacksintensive Metabolite ebenfalls in die Verpackung migrieren.

Das Problem des flavor-carry-over wurde bereits in US-A-4 680 060 beschrieben. Jedoch erwies sich die hierin beschriebene Lösung, Behandlung mit reinem Propylenglykol, als nicht zufriedenstellend. Auch die Behandlung mit organischen Lösungsmitteln, wie sie z.B. in der DE-A-40 14 747 zur äußerlichen Reinigung von Kunststoff-Mehrweggebinden oder kunststoffbeschichteten Mehrweg-Glasgebinden verwendet wird, erwies sich als unzureichend für die Entfernung der migrierten Aromabestandteile.

In Anbetracht der Tatsache, daß die in den vorstehend genannten Druckschriften verwendeten organischen Lösungsmittel darüber hinaus teilweise toxikologisch bedenkliche Substanzen sind, bestand die Aufgabenstellung der vorliegenden Erfindung darin, die Entfernung migrierter Bestandteile aus Mehrweg-Kunststoffgebinden für Lebensmittel und damit die Wiederverwendung von Kunststoffgebinden für aromahaltige Lebensmittel und Milchprodukte zu ermöglichen. Es sollte dabei eine rückstandsfreie "Reinigung" gewährleistet sein, d.h. "Reinigungsmittel" und Zerfallsprodukte sollen gut in Wasser löslich sein, geruch- und geschmacklos sein und darüber hinaus keine Umweltbelastung darstellen. Weiterhin sollten bei der Reinigung Verfärbungen der Kunststoffgebinde und/oder ein Angriff auf die Oberfläche des Kunststoffmaterials vermieden werden. Ebenfalls zu berücksichtigen ist, daß, die Kunststoffmaterialien nur relativ niedrigen bzw. nur kurzzeitig höheren Temperaturen ausgesetzt werden dürfen, da sie sonst zu Verformungen neigen.

EP-A-0 436 042 beschreibt ein Verfahren zum Sterilisieren von Behältern, wobei zu den hier genannten Behältern auch solche aus Kunststoff, beispielsweise Kunststoff-Flaschen, zählen. Bei diesem Verfahren werden die inneren Oberflächen der Behälter mit einem Ozon-enthaltenden Gas oder Ozon-Wasser, welche jeweils Ozon in hohen Konzentrationen enthalten, behandelt. Auf diese Weise werden Mikroorganismen, die an den inneren Wandungen derartiger Behälter anhaften, wirksam abgetötet.

Überraschenderweise wurde gefunden, daß Oxidationsmittel zur Eliminierung von insbesondere migrierten Aromabestandteilen aus Mehrweg-Kunststoffgebinden geeignet sind.

Gegenstand der vorliegenden Erfindung ist demgemäß die Verwendung von Oxidationsmitteln, ausgewählt aus Chlordioxid, organischen Persäuren, alkalischen Hypochloridaten, Wasserstoffperoxid, alkalischen Perboraten und alkalischen Percarbonaten, zur Behandlung von Mehrweg-Gebinden, die aus Kunststoff bestehen und zur Aufnahme von Lebensmittel dienen, zur Eliminierung migrierter Bestandteile, insbesondere von Aromabestandteilen, aus denselben.

Erfindungsgemäß sind die Kunststoffgebinde für die Aufnahme von Getränken und/oder Milchprodukten geeignet und bestehen vorzugsweise aus Polyethylenterephthalat (PET), Polycarbonat (PC), Polypropylen (PP), Polyacrylnitril (PAN), Polyethylennaphthalat (PEH) oder Polyvinylchlorid (PVC).

Im Sinne der Erfindung werden die Gebinde bevorzugt mit einer Oxidationsmittel-haltigen flüssigen Phase und/oder mit einer Oxidationsmittel-haltigen gasförmigen Phase behandelt.

Als Oxidationsmittel-haltige flüssige Phase kommen hierbei Lösungen eines oder auch mehrere der genannten Oxidationsmittel in Wasser oder aber in organischen Lösungsmitteln in Frage. Als Lösungsmittel können generell alle entsprechenden Mittel Verwendung finden, die das jeweils ausgewählte Oxidationsmittel hinreichend zu lösen vermögen und sowohl mit diesem als auch mit dem Kunststoff der zu behandelnden Gebinde verträglich sind, d.h. chemisch inert sind. Erfindungsgemäß ist Wasser als Lösungsmittel bevorzugt. Für spezielle Anwendungsfälle können jedoch auch entsprechende organische Lösungsmittel Verwendung finden; der Fachmann wird hierbei eine - auf den jeweiligen Fall bezogene - geeignete Auswahl treffen, beispielsweise aus den in der bereits vorstehend zitierten DE-A-40 14 747 angegebenen Lösungsmitteln.

Als Oxidationsmittel-haltige gasförmige Phase kommen insbesondere die genigen unter den genannten Oxidationsmitteln, die gasförmig sind, beispielsweise Chlordioxid, mit oben genannten Oxidationsmitteln angereicherte Trägergase, beispielsweise Luft, oder aber oben genannte Oxidationsmittel Wasserdampf in Frage. Oxidationsmittel-haltiger Wasserdampf ist erfindungsgemäß bevorzugt. Einen solchen Wasserdampf kann man beispielsweise. dadurch erhalten, daß man die wäßrige Lösung eines oder mehrerer Oxidationsmittel direkt - beispielsweise mit Hilfe eines Injektors - in Wasserdampf einleitet bzw. einbläst. Hierfür insbesondere geeignete Oxidationsmittel, die sich leicht in die Gasphase überführen lassen, sind Chlordioxid, organische Persäuren und Wasserstoffperoxid.

Erfindungsgemäß ist es generell möglich und gegebenenfalls - sofern erforderlich - von Vorteil, die Gebinde sowohl mit einer oder mehreren Oxidationsmittel-haltigen flüssigen Phasen als auch mit einer oder mehreren Oxidationsmittel-haltigen gasförmigen Phasen zu behandeln. Hierbei ist es im Sinne der Erfindung bevorzugt, daß man die Gebinde mit Oxidationsmittel-haltigen wäßrigen Lösungen und/oder mit Oxidationsmittel-haltigem Wasserdampf behandelt. Bei einer derartigen Behandlung der Gebinde mit Wasserdampf ist jedoch zu beachten, daß die Stabilität der Gebinde - in Abhängigkeit vom jeweiligen Kunststoff - gewährleistet ist.

Erfindungsgemäß können die Oxidationsmittel dabei sowohl zusätzlich zu waschaktiven Substanzen, d.h. in Kombination mit an sich bekannten Komponenten von Reinigungsmitteln der Lebensmittelindustrie, in einem Hauptreinigungsschritt als auch in einem oder mehreren zusätzlichen Oxidations-Schritten eingesetzt werden. Diese zusätzlichen Oxidations-Schritte können sowohl vor als auch nach dem eigentlichen Hauptreinigungsschritt durchgeführt werden und dabei sowohl eine Behandlung in flüssiger Phase als auch mit Oxidationsmittel-haltigem Wasserdampf sein. In diesem Sinne ist es erfindungsgemäß bevorzugt, daß man die Behandlung der Gebinde, insbesondere von Kunststoffflaschen, mit Oxidationsmitteln in einem wäßrigen Hauptreinigungsbad, das mindestens ein Oxidationsmittel in Kombination mit an sich bekannten Komponenten von Reinigungsmitteln für die Lebensmittelindustrie enthält, und/oder in mindestens einem separaten Schritt durchführt. Unter "Hauptreinigungsbad" wird hierbei insbesondere das wäßrige Reinigungsbad in einer für derartige Zwecke gebräuchlichen Flaschenreinigungsanlage verstanden. Als "an sich bekannte Komponenten von Reinigungsmitteln" kommen hierbei beispielsweise schmutzaufschließende Komponenten, wie Alkalimetallhydroxide, insbesondere Natronlauge, oberflächenaktive Substanzen (Tenside), Komplexierungs- bzw. Sequestrierungsmittel, sowie ferner Antischaummittel und anorganische und/oder organische Säuren in Frage. Eine Übersicht über derartige Komponenten findet sich beispielsweise in "Ullmann's Encyklopädie der technischen Chemie", 4. Auflage, Band 20, Seiten 153 bis 155.

Die erfindungsgemäße Behandlung der Gebinde mit Oxidationsmitteln läßt sich in einem weiten Temperaturbereich von 0 bis 130 °C - jeweils in Abhängigkeit von der zur Anwendung gelangenden Phase - durchführen. Generell gilt hierbei, daß sich mit steigender Temperatur bessere Effekte hinsichtlich der Eliminierung migrierter Bestandteile aus den Kunststoff-Gebinden erzielen lassen. So können bei einer Behandlung mit Oxidationsmittel-haltigen gasförmigen Phasen durchaus die höheren Temperaturen des vorstehend angegebenen Temperaturbereiches angewendet werden. Stets ist jedoch hierbei zu beachten, daß die Stabilität der Gebinde - in Abhängigkeit vom jeweiligen Kunststoff - gewährleistet ist, wie vorstehend im Zusammenhang mit Oxidationsmittel-haltigem Wasserdampf bereits ausgeführt. Bevorzugt wird die erfindungsgemäße Behandlüng im Temperaturbereich von 50 °C bis unterhalb der Erweichungstemperatur des jeweiligen Kunststoffmaterials durchgeführt. Dies gilt insbesondere für eine Behandlung der Gebinde mit flüssigen, insbesondere wäßrigen Phasen. So liegt hierbei beispielsweise die obere Grenze des Temperaturbereiches für PET-Material unter 60 °C und für PC-Material bis zu 80 °C.

Die Behandlungsdauer der Gebinde im Rahmen der Erfindung kann gleichfalls in weiten Grenzen schwanken und hängt primär von der Art der verwendeten Oxidationsmittel-Phase ab. Arbeitet man mit gasförmigen Phasen, beispielsweise mit Wasserdampf, der mit Oxidationsmitteln beladen ist, oder direkt mit gasförmigem Chlordioxid, so sind in der Regel Behandlungszeiten im Bereich von 1 bis 10 Sekunden hinreichend. Bei der Anwendung flüssiger, insbesondere wäßriger Phasen kann die Bohandlungsdauer - ohne eine Beeinträchtigung des Kunststoffmaterials - mehrere Stunden bis zu mehreren Tagen betragen. Im allgemeinen sind hierbei jedoch Behandlungszeiten im Bereich von 30 Sekunden bis 15 Minuten, vorzugsweise von 1 bis 10 Minuten, für die zu erzielenden Effekte hinreichend.

Chlordioxid, dessen Verwendung als Desinfektionsmittel für harte Oberflächen beispielsweise aus der DE-A-39 28 747 bekannt ist, kann erfindungsgemäß sowohl in gasförmiger Phase als auch in wäßriger Lösung eingesetzt werden. Als organische Persäuren werden erfindungsgemäß vorzugsweise Peressigsäure und/oder Perpropionsäure verwendet, insbesondere in Kombination mit einem molaren Überschuß an Wasserstoffperoxid. Entsprechende Percarbonsäurekonzentrate, die zur Bereitstellung von im erfindungsgemäßen Sinne zu verwendenden wäßrigen Lösungen dienen können, werden beispielsweise in den DE-A-25 36 618, 25 36 617, 26 16 049 und in der EP-A-0 147 207 beschrieben. Sie enthalten Peressigsäure oder Perpropionsäure und/oder die entsprechenden aliphatischen Monocarbonsäuren, einen molaren Überschuß an Wasserstoffperoxid sowie gegebenenfalls Phosphonsäuren und anionische Tenside in Form von Sulfonsäuren, Sulfonaten oder Sulfaten. Wasserstoffperoxid kann im Sinne der Erfindung auch alleine als Oxidationsmittel dienen. Es wird hierbei sowohl in neutralen als auch sauren oder alkalischen wäßrigen Lösungen eingesetzt; vorzugsweise in Form von sauren wäßrigen Lösungen. Hypochlorite, Perborate und Percarbonate werden erfindungsgemäß vorzugsweise in Form ihrer wasserlöslichen Salze, insbesondere ihrer Alkalimetallsalze, eingesetzt. Bevorzugt ist hierbei die Verwendung der entsprechenden Natrium- oder Kaliumsalze, insbesondere der Natriumsalze. Wenn im Zusammenhang mit derartigen Salzen von "alkalisch" die Rede ist, so werden hierunter wäßrige Lösungen dieser Salze mit einem pH-Wert im Bereich größer 7, vorzugsweise im pH-Bereich von 8 bis 12, verstanden. Die Einstellung eines solchen pH-Bereiches kann - wie dem Fachmann hinreichend bekannt - beispielsweise durch Zusatz geeigneter Laugen, vorzugsweise Natronlauge, erfolgen.

Von den vorstehend erörterten Oxidationsmitteln werden im Sinne der Erfindung vorzugsweise Chlordioxid, die genannten organischen Persäuren, Natriumhypochlorit und auch Wasserstoffperoxid eingesetzt. Bevorzug ist ferner der Einsatz dieser Oxidationsmittel im Rahmen der Erfindung in Form von wäßrigen Lösungen oder auch in Verbindung mit Wasserdampf in gasförmiger Phase.

Gemäß einer weiteren bevorzugten Ausführungsform wird als Oxidationsmittel Chlordioxid in wäßriger Lösung eingesetzt, wobei der Chlordioxid-Gehalt der wäßrigen Lösung 0,0002 bis 20 Gew.-‰, vorzugsweise 0,01 bis 2 Gew.-‰ insbesondere 0,05 bis 1 Gew.-‰ beträgt.

Gemäß einer weiteren bevorzugten Ausführungsform werden als Oxidationsmittel organische Persäuren in wäßriger Lösung eingesetzt, wobei der Persäure-Gehalt der wäßrigen Lösung 0,01 bis 400 Gew-‰, vorzugsweise 0,1 bis 50 Gew.-‰ insbesondere 0,5 bis 20 Gew.-‰ beträgt.

Eine weitere bevorzugte Ausführungsform der vorliegenden Erfindung betrifft die Verwendung von Natriumhypochlorit in alkalischer, wäßriger Lösung, wobei der Aktivchlorgehalt der wäßrigen Lösungen 0,001 bis 130 Gew.-‰ vorzugsweise 0,1 bis 10 Gew.-‰, insbesondere 0,5 bis 5 Gew.-‰, beträgt.

Erfindungsgemäß kann das Oxidationsmittel in Form eines wäßrigen Konzentrates einer wäßrigen Behandlungslösung oder Wasserdampf zugesetzt werden.

Durch die erfindungsgemäße Behandlung mit Oxidationsmittellösungen kann die migrierte Aromamenge in Mehrweg-Kunststoffgebinden deutlich verringert werden, so daß die Remigration dieser Aromabestandteile vermieden werden kann, und ermöglicht somit die Wiederverwertung von Kunststoffgebinden im Lebensmittelbereich. Darüber hinaus kann die erfindidungsgemäße Verwendung durch Wahl des Oxidationsmittels, dessen Konzentration, Behandlungsdauer und Behandlungstemperatur an das jeweilige Kunststoff-Material angepaßt werden.

Die vorliegende Erfindung wird durch die nachfolgenden Beispiele näher erläutert.

### Beispiele

### Beispiel 1 (Behandlung von Polyethylenterephthalat [PET)- und Polycarbonat [PC]-Flaschen)

Polyethylenterephthalat- und Polycarbonat-Flaschen wurden mit Aromakonzentrat-Lösungen (PET - 0,1 Gew.-% wäBrige Lösung des Aromakonzentrats; PC - 0,01 Gew.-% wäßrige Lösung des Aromakonzentrates) 1 Woche bei 45 °C gelagert. Die Flaschen wurden entleert und in einem ersten Reinigungsschritt mit einer wäßrigen Lösung enthaltend 2 Gew.-% NaOH und 0,2 Gew.-% eines käuflichen Flaschenreinigungs-Additives (a) gefüllt, wobei die Temperatur der Lösung 59 °C (PET) bzw. 80 °C (PC) betrug. Die befüllten Flaschen wurden 7,5 min getaucht stehengelassen, anschließend entleert und mit Leitungswasser alkalifrei gespült. In einem zweiten Reinigungsschritt (b) wurden die Flaschen dann zur Entfernung der migrierten Aromabestandteile weiterbehandelt (bei wäßrigen Reinigungsschritten betrug die Temperatur der Lösungen ebenfalls 59 °C (PET) bzw. 80 °C (PC)). Nach gegebenenfalls notwendiger weiterer Spülung mit Leitungswasser und nachfolgender fünfminütiger Abtropfzeit wurden die Flaschen zerkleinert und die Aromabestandteile im Kunststoff head-space-gaschromatographisch bestimmt.

Im Rahmen der Beispiele I und II wurden die nachstehend angeführten handelsüblichen Produkte eingesetzt:
P3-stabilon^{R} Al-flüssig: Additiv für Reinigungsbäder zur Flaschenreinigung auf Basis von Phosphorsäure, organischen Säuren Sequestriermitteln und Tensiden (Fa. Henkel KGaA).
P3-stabilon^{R} flüssig: Additiv für Reinigungsbäder zur Flaschenreinigung, Basis wie vorstehend angegeben (Fa. Henkel KGaA).
P3-Prevafoam^{R} PB: Antischaummittel für Reinigungsbäder (Flaschenreinigung) auf Basis schaumdämpfender Tenside (Fa. Henkel KGaA).
P3-stabilon^{R} WT: Additiv für alkalische Reinigungsbäder (Flaschenreinigung) auf Basis organischer Säuren und Sequestriermitteln (Fa. Henkel KGaA).
P3-oxonia^{R} aktiv: Desinfektionsmittel auf Basis Peressigsäure/ Wasserstoffperoxid (Fa. Henkel KGaA).
P3-hypochloran^{R}: Desinfektionsmittel auf Basis von Natriumhypochlorit, alkalisch (Fa. Henkel KGaA).
Divo^{R} RPB: Additiv für die Flaschenreinigung (Fa. Diversey).
Solgon^{R} SU560: Additiv für die Flaschenreinigung (Fa. Lever).

Die nachstehenden Tabelle I und -II zeigen die im jeweiligen Kunststoffmaterial - PET und PC - verbliebenen Mengen der eingesetzten Aromastoffe - Benzaldehyd und Limonen - in µg/g bzw. % (bezogen auf die Einsatzmenge) nach erfolgter Behandlung. Die mit Stern (*) gekennzeichneten Vergleichsbeispiele betreffen jeweils die - nicht erfindungsgemäße - Behandlung mit handelsüblichen Reinigern, gegebenenfalls in Kombination mit organischen Lösungsmitteln oder einer Temperaturbehandlung.

Bei den Prozentangaben handelt es sich um Gewichtsprozente.

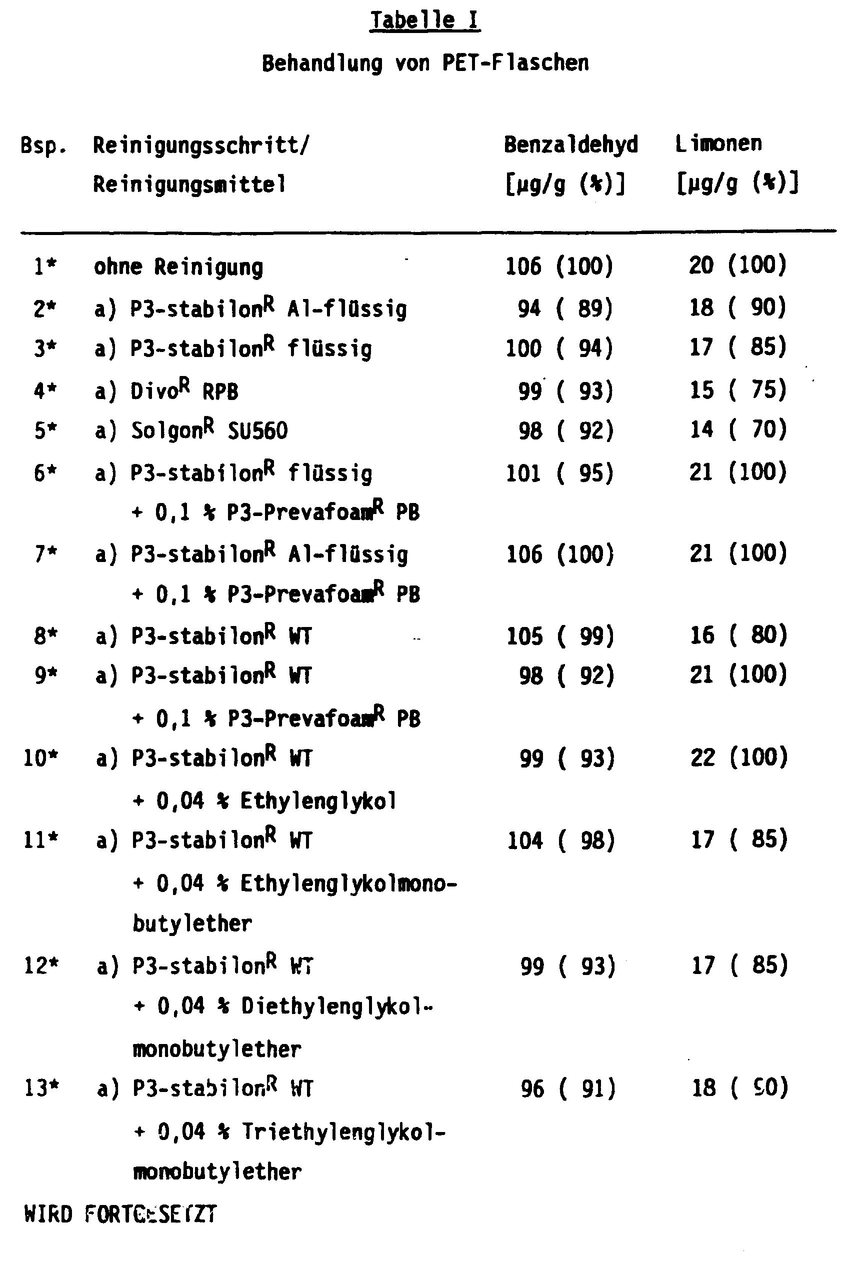

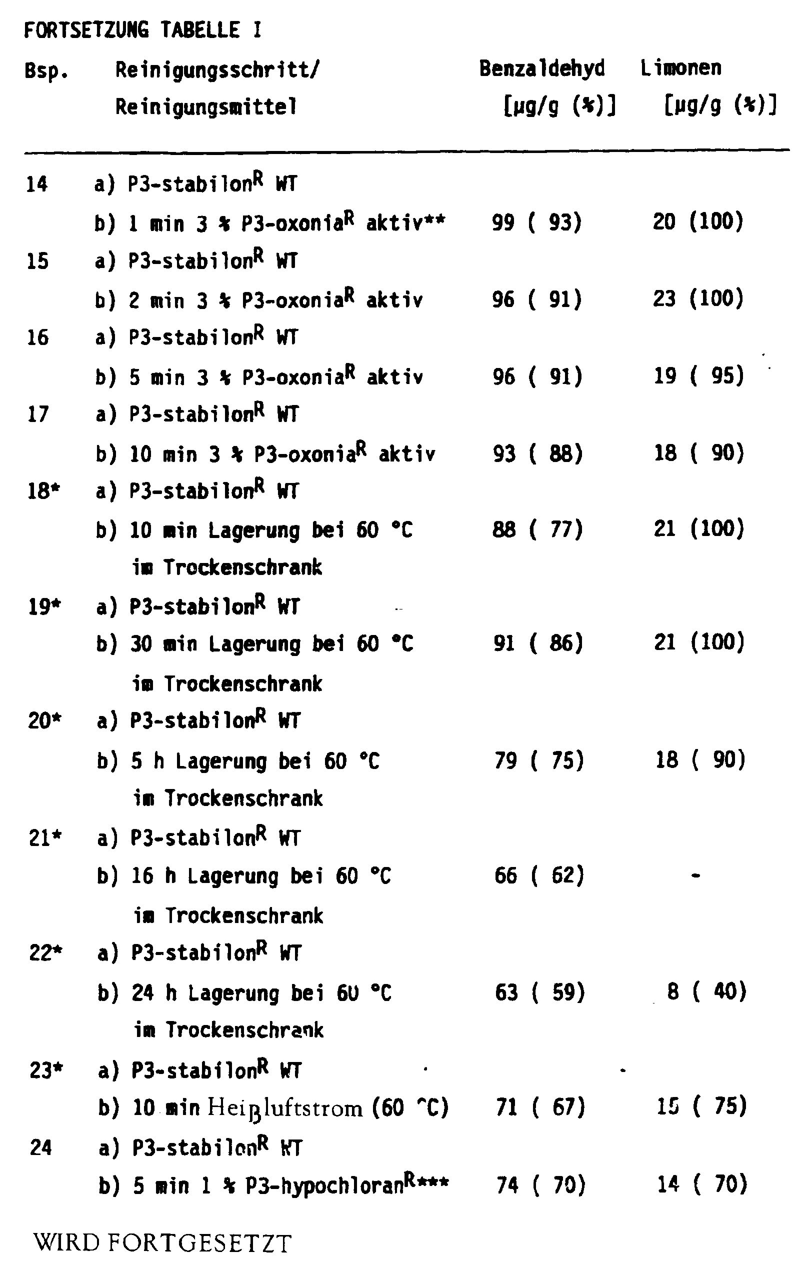

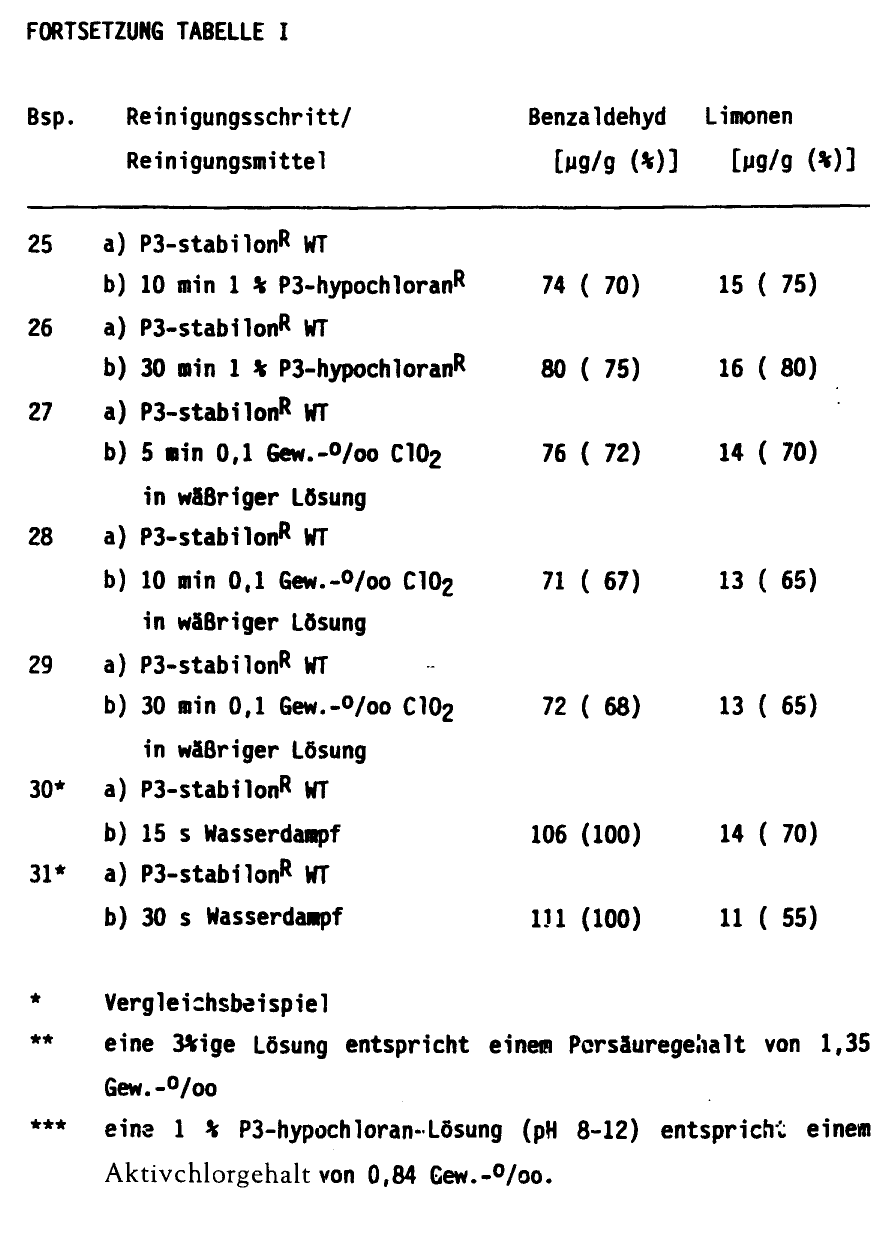

**Tabelle II**

| Behandlung von PC-Flaschen | | | |
|---|---|---|---|
| Bsp. | Reinigungsschritt/Reinigungsmittel | Benzaldehyd [µg/g (%)] | Limonen [µg/g (%)] |
| 1* | ohne Reinigung | 48 (100) | 27 (100) |
| 2 | a) P3-stabilon^{R} WT | 49 (100) | 10 ( 37) |
| | b) 5 min 3 % P3-oxonia^{R} aktiv** | | |
| 3 | a) P3-stabilon^{R} WT | 46 ( 96) | 12 ( 44) |
| | b) 10 min 3 % P3-oxonia^{R} aktiv | | |
| 4* | a) P3-stabilon^{R} WT | 52 (100) | 15 ( 56) |
| | b) 30 min Lagerung bei 80 °C im Trockenschrank | | |
| 5* | a) P3-stabilon^{R} WT | <1 bis 1 (< 2 bis 2) | 1 bis 2 (5 bis 10) |
| | b) 24 h Lagerung bei 80 °C im Trockenschrank | | |
| 6 | a) P3-stabilon^{R} WT | 35 ( 73) | 18 ( 67) |
| | b) 10 min 1 % P3-hypochloran^{R}*** | | |
| 7 | a) P3-stabilon^{R} WT | 33 ( 69) | 19 ( 70) |
| | b) 30 min 1 % P3-hypochloran^{R} | | |
| 8 | a) P3-stabilon^{R} WT | 38 ( 79) | 9 ( 33) |
| | b) 10 min 0,1 Gew.-‰ ClO₂ in wäßriger Lösung | | |
| 9 | a) P3-stabilon^{R} WT | 33 ( 69) | 5 ( 19) |
| | b) 30 min 0,1 Gew.-‰ ClO₂ in wäßriger Lösung | | |
| 10* | a) P3-stabilon^{R} WT | 49 (100) | 22 ( 81) |
| | b) 30 s Wasserdampf | | |
| 11* | a) P3-stabilon^{R} WT | 28 ( 58) | 16 ( 59) |
| | b) 1 min Wasserdampf | | |

| | | | |
|---|---|---|---|
| * Vergleichsbeispiel | | | |
| ** eine 3%ige Lösung entspricht einem Persäuregehalt von 1,35 Gew.-‰ | | | |
| *** eine 1 % P3-hypochloran-Lösung (pH 8-12) entspricht einem Aktivchlorgehalt von 0,84 Gew.-‰. | | | |

### Beispiel II (Behandlung von Milchflaschen aus Polycarbonat)

Benutzte Milchflaschen aus Polycarbonat, die einen typischen Geruch nach "altem Käse" aufwiesen, wurden gemäß dem ersten Reinigungsschritt des Beipieles 1 - Additiv P3-stabilon^{R} WT - gereinigt. Die Flaschen sind direkt nach dem Reinigungsschritt frei von dem typischen Käsegeruch, der jedoch innerhalb kürzester Zeit zurückkehrt.

Die so vorgereinigten PC-Flaschen wurden daraufhin mit einer 2 %igen P3-oxonia^{R} aktiv 150-Lösung (Persäuregehalt 0,3 Gew.-%) bei 80 °C behandelt und nachfolgend mit Leitungswasser gespült. Daraufhin wurden die Flaschen mit Aluminiumfolie verschlossen und bei Raumtemperatur gelagert.

Die Geruchsneubildung im Inneren der Flaschen in Abhängigkeit von der Behandlungszeit mit Oxidationsmittel ist Tabelle III zu entnehmen.

**Tabelle III**

| Dauer der Oxidationsbehandlung [min] | Geruchstest nach Oxidationsmittel-Behandlung Zeit nach Behandlung [h] | | | | |
|---|---|---|---|---|---|
| | 0 | 0,5 | 1 | 1,5 | 20 |
| 1 | - | schwach | mittel | stark | stark |
| 2 | - | schwach | schwach | mittel | mittel |
| 3 | - | - | schwach | mittel | mittel |
| 4 | - | - | - | schwach | schwach |
| 10 | - | - | - | schwach | mittel |

## Patentansprüche

1. Verwendung von Oxidationsmitteln, ausgewählt aus Chlordioxid, organischen Persäuren, alkalischen Hypochloriten, Wasserstoffperoxid, alkalischen Perboraten und alkalischen Percarbonaten, zur Behandlung von Mehrweg-Gebinden, die aus Kunststoff bestehen und zur Aufnahme von Lebensmitteln dienen, zur Eliminierung migrierter Bestandteile, insbesondere von Aromabestandteilen, aus denselben.

2. Verwendung nach Anspruch 1, dadurch gekennzeichnet, daß man Gebinde behandelt, die aus Polyethylenterephthalat, Polycarbonat, Polypropylen, Polyacrylnitril, Polyethylennaphthalat oder Polyvinylchlorid bestehen und zur Aufnahme von Getränken und/oder Milchprodukten dienen.

3. Verwendung nach Anspruch 1 oder 2, dadurch gekennzeichnet, daß man die Gebinde mit einer Oxidationsmittel-haltigen flüssigen Phase und/oder mit einer Oxidationsmittel-haltigen gasförmigen Phase behandelt.

4. Verwendung nach einem der Ansprüche 1 bis 3, dadurch gekennzeichnet, daß man die Gebinde mit Oxidationsmittel-haltigen wäßrigen Lösungen und/oder mit Oxidationsmittel-haltigem Wasserdampf behandelt.

5. Verwendung nach einem der Ansprüche 1 bis 4, dadurch gekennzeichnet, daß man die Behandlung der Gebinde mit Oxidationsmitteln in einem wäßrigen Hauptreinigungsbad, das mindestens ein Oxidationsmittel in Kombination mit an sich bekannten Komponenten von Reinigungsmitteln für die Lebensmittelindustrie enthält, und/oder in mindestens einem separaten Schritt durchführt.

6. Verwendung nach einem der Ansprüche 1 bis 5, dadurch gekennzeichnet, daß man die Behandlung der Gebinde mit Oxidationsmitteln bei Temperaturen im Bereich von 0 bis 130 °C, vorzugsweise im Bereich von 50 °C bis unterhalb der Erweichungstemperatur des jeweiligen Kunststoffmaterials, durchführt.

7. Verwendung nach einem der Ansprüche 1 bis 6, dadurch gekennzeichnet, daß als Oxidationsmittel Chlordioxid in wäßriger Lösung eingesetzt wird, wobei der Chlordioxid-Gehalt der wäßrigen Lösung 0,0002 bis 20 Gew.-‰, vorzugsweise 0,01 bis 2 Gew.-‰, insbesondere 0,05 bis 1 Gew.- ‰, beträgt.

8. Verwendung nach einem der Ansprüche 1 bis 6, dadurch gekennzeichnet, daß als Oxidationsmittel eine organische Persäure in wäßriger Lösung, insbesondere Peressigsäure und/oder Perpropionsäure, eingesetzt wird, wobei der Persäure-Gehalt der wäßrigen Lösung 0,01 bis 400 Gew.- ‰, vorzugsweise 0,1 bis 50 Gew.-‰, insbesondere 0,5 bis 20 Gew.-‰, beträgt.

9. Verwendung nach einem der Ansprüche 1 bis 6, dadurch gekennzeichnet, daß als Oxidationsmittel Natriumhypochlorit in alkalischer, wäßriger Lösung eingesetzt wird, wobei der Aktivchlor-Gehalt der wäßrigen Lösung 0,001 bis 130 Gew.- ‰, vorzugsweise 0,1 bis 10 Gew.- ‰, insbesondere 0,5 bis 5 Gew.-‰, beträgt.

10. Verwendung nach einem der Ansprüche 1 bis 9, dadurch gekennzeichnet, daß man das Oxidationsmittel in Form eines wäßrigen Konzentrats einer wäßrigen Behandlungslösung oder Wasserdampf zusetzt.

## Claims

1. The use of oxidants selected from chlorine dioxide, organic peracids, alkaline hypochlorites, hydrogen peroxide, alkaline perborates and alkaline percarbonates for treating returnable plastic containers for foods for the purpose of eliminating migrated components, more particularly flavoring components, therefrom.

2. The use claimed in claim 1, characterized in that containers of polyethylene terephthalate, polycarbonate, polypropylene, polyacrylonitrile, polyethylene naphthalate or polyvinyl chloride for accommodating beverages and/or milk products are treated.

3. The use claimed in claim 1 or 2, characterized in that the containers are treated with an oxidant-containing liquid phase and/or with an oxidant-containing gas phase.

4. The use claimed in any of claims 1 to 3, characterized in that the containers are treated with oxidant-containing aqueous solutions and/or with oxidant-containing steam.

5. The use claimed in any of claims 1 to 4, characterized in that the treatment of the containers with oxidants is carried out in a water-containing main cleaning bath which contains at least one oxidant in combination with components known per se of cleaning compositions for the food industry and/or in at least one separate step.

6. The use claimed in any of claims 1 to 5, characterized in that the treatment of the containers with oxidants is carried out at temperatures of 0 to 130°C and preferably at temperatures in the range from 50°C to below the softening temperature of the particular plastic material.

7. The use claimed in any of claims 1 to 6, characterized in that chlorine dioxide in the form of an aqueous solution is used as the oxidant, the chlorine dioxide content of the aqueous solution being from 0.0002 to 20‰ by weight, preferably from 0.01 to 2‰ by weight and, more preferably, from 0.05 to 1‰ by weight.

8. The use claimed in any of claims 1 to 6, characterized in that an organic peracid in the form of an aqueous solution, more particularly peracetic acid and/or perpropionic acid, is used as the oxidant, the peracid content of the aqueous solution being from 0.01 to 400‰ by weight, preferably from 0.1 to 50‰ by weight and, more preferably, from 0.5 to 20‰ by weight.

9. The use claimed in any of claims 1 to 6, characterized in that sodium hypochlorite in the form of an alkaline aqueous solution is used as the oxidant, the active chlorine content of the aqueous solution being from 0.001-130‰ by weight, preferably from 0.1 to 10‰ by weight and, more preferably, from 0.5 to 5‰ by weight.

10. The use claimed in any of claims 1 to 9, characterized in that the oxidant is added to an aqueous treatment solution or to steam in the form of an aqueous concentrate.

## Revendications

1. Utilisation d'oxydants sélectionnés parmi le dioxyde de chlore, des peracides organiques, des hypochlorites alcalins, l'eau oxygénée, des perborates alcalins et des percarbonates alcalins, pour le traitement des emballages réutilisables, qui sont constitués de plastique et sont destinés à contenir des aliments, pour l'élimination de ceux-ci des constituants ayant migré, en particulier des composants aromatiques.

2. Utilisation selon la revendication 1, caractérisée en ce que l'on trait e des emballages, qui sont constitués de polyéthylènetéréphtalate, de polycarbonate, de polypropylène, de polyacrylonitrile, de polyéthylènenaphtalate ou de chlorure de polyvinyle et qui sont destinés à contenir des boissons et/ou des produits laitiers.

3. Utilisation selon la revendication 1 ou 2, caractérisée en ce que l'on traite les emballages par une phase liquide contenant des oxydants et/ou par une phase gazeuse contenant des oxydants.

4. Utilisation selon une des revendications 1 à 3, caractérisée en ce que l'on traite les emballages par des solutions aqueuses contenant des oxydants et/ou par de la vapeur d'eau contenant des oxydants.

5. Utilisation selon une des revendications 1 à 4, caractérisée en ce que l'on opère le traitement des emballages par des oxydants dans un bain de nettoyage principal aqueux, qui contient au moins un oxydant en association avec des composés connus en soi d'agents de nettoyage pour l'industrie alimentaire et/ou dans au moins une étape séparée.

6. Utilisation selon une des revendications 1 à 5, caractérisée en ce que l'on opère le traitement des emballages par des oxydants à des températures comprises dans la plage s'étendant de 0 à 130 °C, de préférence dans la plage s'étendant de 50 °C jusqu'en deçà de la température de ramollissement de la matière plastique respective.

7. Utilisation selon une des revendications 1 à 6, caractérisée en ce que l'on met en oeuvre comme oxydant, du dioxyde de chlore en solution aqueuse, auquel cas la concentration en dioxyde de chlore de la solution aqueuse atteint 0,0002 à 20 ‰ en poids, de préférence 0,01 à 2 ‰ en poids, en particulier 0,05 à 1 ‰ en poids.

8. Utilisation selon une des revendications 1 à 6, caractérisée en ce que l'on met en oeuvre comme oxydant, un peracide organique en solution aqueuse, en particulier, de l'acide peracétique et/ou de l'acide perpropionique, auquel cas la concentration en peracide de la solution aqueuse atteint 0,01 à 400 ‰ en poids, de préférence 0,1 à 50 ‰ en poids, en particulier 0,5 à 20 ‰ en poids.

9. Utilisation selon une des revendications 1 à 6, caractérisée en ce que l'on met en oeuvre comme oxydant, de l'hypochlorite de sodium en solution aqueuse alcaline, auquel cas la concentration en chlore actif de la solution aqueuse atteint 0,001 à 130 ‰ en poids, de préférence 0,1 à 10 ‰ en poids, en particulier 0,5 à 5 ‰ en poids.

10. Utilisation selon une des revendications 1 à 9, caractérisée en ce que l'on additionne l'oxydant sous la forme d'un concentré aqueux à une solution de traitement aqueuse ou à de la vapeur d'eau.
